Europäisches Patentamt

European Patent Office

Office européen des brevets

(11) Publication number: **0 197 689 B1**

(12) **EUROPEAN PATENT SPECIFICATION**

(45) Date of publication of patent specification: **12.02.92**

(51) Int. Cl.⁵: **C08F 4/68**, C08F 2/34, C08F 10/00

(21) Application number: **86302085.5**

(22) Date of filing: **20.03.86**

The file contains technical information submitted after the application was filed and not included in this specification

(54) **A process for polymerizing a monomer charge.**

(30) Priority: **21.03.85 US 714433**
**21.03.85 US 714554**
**25.03.85 US 715271**

(43) Date of publication of application:
**15.10.86 Bulletin 86/42**

(45) Publication of the grant of the patent:
**12.02.92 Bulletin 92/07**

(84) Designated Contracting States:
**BE DE FR GB IT NL SE**

(56) References cited:
**US-A- 4 435 518**

(73) Proprietor: **CITIES SERVICE OIL & GAS CORPORATION**
**110 West Seventh Street P.O. Box 300**
**Tulsa Oklahoma 74102(US)**

(72) Inventor: **Pennington, B. Timothy**
**2215 St. Francis Street**
**Sulphur, LA 70663(US)**
Inventor: **Roling, Paul V.**
**4323 Chestergate**
**Spring, TX 77373(US)**
Inventor: **Hsieh, John T.T.**
**9 Ellsworth Drive**
**Warren, NJ 07060(US)**
Inventor: **Veazey, Richard L.**
**38 Brooktree Road**
**East Windsor, NJ 08520(US)**
Inventor: **Aylward, David E.**
**37 Madison Avenue, Apt. 59**
**Madison, NJ 07940(US)**

(74) Representative: **Harrison, David Christopher et al**
**MEWBURN ELLIS & CO 2/3 Cursitor Street**
**London EC4A 1BO(GB)**

Rank Xerox (UK) Business Services

EP 0 197 689 B1

**Description**

This invention relates to the polymerization of olefins. More particularly, this invention relates to a process having catalyst compositions which are useful for polymerizing one or more monomers comprising ethylene to polymers having a narrow molecular weight distribution and a good balance of physical properties.

It is known that catalysts of the type variously described as coordination, Ziegler, Ziegler-type, or Ziegler-Natta catalysts are useful for the polymerization of olefins under moderate conditions of temperature and pressure. It is also known that the properties of the polymers obtainable by the use of such catalysts, as well as the relative economies of the processes used to prepare the polymers, vary with several factors, including the choice of the particular monomers, catalyst components, polymerization adjuvants, and other polymerization conditions employed.

During the years since Ziegler catalysts were first publicly disclosed, there has been a considerable amount of research conducted on the use of such catalysts; and numerous publications have resulted from that research. These publications have added much to the knowledge of how to make various types of olefin polymers by various types of processes. However, as is apparent from the amount of research on Ziegler catalysis that is still being conducted throughout the world, as well as the number of patents that are still being issued to inventors working in the field of Ziegler catalysis, the means of attaining certain results when polymerizing olefins with Ziegler catalysts are still frequently unpredictable. The fact that this situation exists is sometimes due to the need to obtain a previously-unattainable combination of results; occasionally due to difficulties in obtaining the same results in a commercial-scale apparatus as in a laboratory-scale reactor; and often due to a polymerization parameter's having an effect, or side-effect, in a given type of polymerization process that is different from effects achieved by its use in prior art processes of a different type.

One aspect of Ziegler catalysis in which the need for further research has been found to exist has been in the provision of catalyst compositions suitable for use in a commercially-feasible process for preparing ethylene polymers having a narrow molecular weight distribution and a good balance of physical properties. Such polymers have particular application in the production of articles that are formed by injection molding; typically have molecular weight distributions such that their normalized $V_{30}/V_{300}$ melt viscosity ratios are in the range of about 1.5 to 2.3, with the ratios in the lower portion of this range being generally preferred but difficult to attain with known processes that might otherwise be commercially feasible; and - like other polymers intended for commercial use - are desirably prepared by a process which is as economical as possible as well as being capable of producing a polymer having the desired properties.

There are, of course, known processes for preparing injection molding resins by polymerizing ethylene with the aid of Ziegler catalysts. However, the known processes typically suffer one or more of the disadvantages of lack of economy, inability to produce polymers having a suitable balance of properties, and/or unreliability in producing such polymers - particularly in commercial-scale operations.

US-A-4,003,712 (Miller) teaches a gas-phase fluidized bed system and process which are capable of being scaled up to commercial size and, being solvent-free, would be less expensive than processes which use solvents or liquid diluents. However, Miller's silyl chromate catalyst does not give polymers of the desired molecular weight distribution and good balance of physical properties. His system contains some features which tend to shorten commercial "on-stream" time. He does not teach how to avoid polymer buildup on reactor surfaces, a phenomenon variously referred to as "coating", "fouling", or "sheeting".

What is still needed is a process employing a catalyst which (a) is suitable for use in a gas-phase polymerization process, (b) is capable of yielding polymers having a narrow molecular weight distribution and a good balance of physical properties, (c) has sufficient activity to be economically attractive, (d) does not cause reactor wall fouling, and (e) a gas-phase fluidized bed process which allows the catalyst to perform at its full potential at commercial scale.

GB-A-1,489,410 (Monsanto) teaches gas-phase polymerization processes which, because of their use of supported Ziegler catalysts having a vanadium component and other factors, are commercially attractive processes. However, as taught in the patent, the processes are designed to result in the formation of polymers having the broad molecular weight distributions suitable for blow molding resins rather than the narrower molecular weight distributions needed for injection molding resins; and the patent itself does not suggest how its processes might be modified to result in the formation of polymers having narrower molecular weight distributions. Attempts to make the processes of the Monsanto patent suitable for the preparation of injection molding resins by combining its teachings with the teachings of publications that discuss means of narrowing molecular weight distribution have not been successful. For example, polymers having a sufficiently narrow molecular weight distribution have not been obtained when Monsanto's preferred vanadium halides have been replaced with the alkoxy group-containing vanadium compounds which are within the scope of their patent and which US-A-3,457,244 (Fukuda et al.) and 3,655,583 (Yamamoto et al.) teach to result in the production of polymers having narrower molecular weight distributions when unsupported catalyst systems are employed.

US-A-2,965,626 (Pilar et al) discloses polymerizing organic compounds containing ethylenic unsatuation under relatively mild polymerization conditions with catalysts and alcohol catalyst promoters. More specifically Pilar et al found that the polymerization activity of the catalyst prepared by reaction of alkali reagents with the specified metal salts can be substantially increased by the inclusion of an alcohol in the reaction zone. US-A-3,163,611 (Andersen et al) pertains to the production of high density polyethylene by polymerizing ethylene in the presence of a catalyst exemplified by the material obtained by the interaction of a trialkylaluminum with titanium tetrachlorids.

US-A-3,202,645 (Yancy) presents a process for polymerizing and copolymerizing alpha mono and diolefins by catalysts comprising (a) the product of the reaction between a compound of a metal chosen from the group consisting of the metals of Group IIb and IIIb (where the group numbers correspond to the Mendeleev Periodic Table) and hydroxyl groups on the surface of a finely-divided particulate inorganic solid, preferably finely-divided silica or alumina, and (b) a halide-type compound of a Group IVa, V, VIa, VIIa, or period 4 of Group VIII metal. The polymerization or copolymerization reaction can be effected at suitable temperatures within the range of from about - 25° C. to about 250° C., and pressures ranging from below atmospheric upwardly to any desired maximum pressure, for example, 30,000 p.s.i.g. or even higher pressures. US-A-3,718,636 (Stevens et al) teaches obtaining polyolefins having a wide distribution of molecular weights through the use of a catalyst comprising an organometallic compound, and a solid complex component obtained by reacting a solid bivalent metal compound with an impregnation agent which consists of an organometallic compound, separating the solid reaction product, and reacting the solid reaction product with a halogenated derivative of a transition metal. Stevens et al teach in US-A-3,787,384 another catalyst suitable for use in olefin polymerization and olefin copolymerization which comprises

(a) at least one organometallic compound, and
(b) a solid catalytic component obtained by reacting a support composed of silica, alumina or both silica and alumina with a compound of the formula $MR_nX_{m-n}$ in which M is aluminum or magnesium, R is a hydrocarbon radical containing 1 to 20 carbon atoms, X is hydrogen or a halogen, m is the valence of M, and n is a whole number not less than 1 nor greater than m, separating the solid product of the reaction, reacting said product with an excess of a halogen-containing transition metal compound, and separating the solid reaction product.

US-A-3,925,338 (Ort) teaches that control of particle size of olefin polymers produced by gas-phase polymerization of at least one olefin using Ziegler-type catalysts deposited on solid supports in a fluidized-solids operation is effected by controlling the particle size of the catalyst support. US-A-4,232,140 (Ort) discloses the use of trichlorofluoromethane as a promoter in the polymerization and copolymerization of ethylene with supported Ziegler-type vanadium compound/alkylaluminum compound catalysts in the presence of hydrogen. Ort finds that polymer yields with his supported vanadium-based catalysts are too low for commercial viability unless the catalyst is promoted to high yield with the trichlorofluoromethane promoter. The viscosity ratio data in Ort's examples, which may be related to molecular weight distribution, indicate that none of the polymers have narrow molecular weight distribution. Ort does not teach or suggest how to avoid reactor fouling.

Fukuda et al. also teach that ethylene copolymers or terpolymers having narrow molecular weight distributions can be obtained by the use of an unsupported catalyst composition prepared by (1) mixing an alcohol containing 1 to 12 carbon atoms with $VOCl_3$ and then (2) mixing the mixture thus obtained with an alkylaluminum compound in the presence of the monomers to be interpolymerized and there are other patents, e.g., Stamicarbon's GB-A-1,175,593 and US-A-3,535,269 (Tanaka et al.) 4,071,674 (Kashiwa et al.) and 4,256,865 (Hyde et al.) which teach the use of catalyst compositions prepared by adding an alcohol at some stage during the catalyst preparation. However, although some of these patents are concerned with the production of polymers having narrow molecular weight distributions, none of then teaches a catalyst composition which satisfies the aforementioned need for a catalyst suitable for use in a commercially-attractive gas-phase polymerization process that is capable of producing injection molding-grade polymers having a good balance of physical properties. US-A-4435518 is concerned with catalyst compositions which are prepared by steps (a) to (d) of present claim 1, but does not disclose conditions of utilization as claimed in present claim 1 and which lead to the present advantageous results.

Summary of the Invention

An object of the invention is to provide an economical commercial polymerization process for preparing ethylene polymers having narrow-to-intermediate molecular weight distribution and a good balance of physical properties using non-fouling catalyst compositions.

The foregoing objects of this invention are broadly accomplished by providing a process of polymerizing a monomer charge including ethylene comprising the steps of:

a) drying an inorganic oxide having surface hydroxyl groups to form a support that is substantially free of adsorbed water;

b) reacting the surface hydroxyl groups of the support with at least a substantially stoichiometric amount of at least one organometallic compound corresponding to the formula $R_xMR'_yR''_z$, wherein M is a metal of Group III of the periodic table, R is an alkyl group containing 1 to 12 carbon atoms, R' and R'' are independently selected from the group consisting of H, Cl, and alkyl and alkoxy groups containing 1 to 12 carbon atoms, x has a value of 1 to 3, and y and z each can have a value of 0 to 2 and the sum of y and z is not greater than 3-x, to provide a treated support;

c) reacting the thus-treated support with at least about 0.001 mol, per mol of organometallic compound, of at least one vanadium compound corresponding to a formula selected from $(RO)_nVOX_{3-n}$ and $(RO)_mVX_{4-m}$, in which formulas R represents a $C_1$-$C_{18}$ monovalent hydrocarbon radical that is free of aliphatic unsaturation, X is Cl or Br, n has a value of 0 to 3, and m has a value of 0 to 4;

d) reacting the product of step (c) with at least about 0.1 mol, per mol of organometallic compound, of an alcohol containing 1 to 18 carbon atoms;

e) feeding the product of step (d) into a gas-phase reaction zone in order to form part of the bed in the fluidized-bed reaction zone;

f) feeding, separately and independently of said feeding step (e) and at a different location, a trialkylaluminum into the gas-phase reaction zone such that said bed in the gas-phase reaction zone comprises the product of step (d), the trialkylaluminum, and particulate substantially polymerized ethylene particles, this feeding being at a rate such as to maintain in the fluidized bed of step (g) a ratio of the molar concentration of trialkylaluminum to the molar concentration of the vanadium in the $(RO)_nVOX_{3-n}$ or $(RO)_mVX_{4-m}$ of from 1 to about 5,000;

g) fluidizing the bed of step (f) at a pressure of from about 0.7 to about 4.2 MPa and a temperature of from about 50° to about 120°C by diffusing underneath the bed of step (f) through the distribution plate means a gas mixture comprising ethylene, hydrogen, and chloroform at a rate sufficient to give a linear gas velocity in the bed of step (f) of from about 15 to about 60 cm/sec and to give a molar ratio of chloroform to the vanadium component in the $(RO)_nVOX_{3-n}$ or $(RO)_mVX_{4-m}$ of from about 2 to about 5,000, and the feeding of step (e) taking place at a position from about 1/8 to 1/2 of the height of the fluidized bed above the distribution plate means;

h) removing particulate substantially polymerized ethylene particles from the reaction zone above and near to the distribution plate means, the particles having a narrow-to-intermediate molecular weight distribution; and

i) recycling unreacted gas from step (g) from the top of the reaction zone to the bottom of the reaction zone to below the distribution plate means.

The preparation of catalyst compositions used is fully described in US-A-4435518, which also discusses the criteria determining the particular properties of various compositions.

The catalyst compositions of the invention are prepared by drying the inorganic oxide, reacting the dried inorganic oxide with the organometallic compound, and reacting the thus-treated support with the vanadium compound, and then reacting that reaction product with the alcohol. The conditions under which the inorganic oxide is dried are not critical as long as they are adequate to provide an inorganic oxide that has surface hydroxyl groups and is substantially free of adsorbed water. However, it is ordinarily preferred to dry the inorganic oxide at about 100° to 1000°C., with or without a nitrogen or other inert gas purge, until substantially all adsorbed water is removed. Also, although improved results are obtained by the use of the catalyst compositions of the invention, regardless of the particular temperature at which the inorganic oxide is dried, the drying temperature has been found to have a negligible-to-noticeable effect on those results - optimum results generally being obtained when the inorganic oxide has been dried at about 200°- 600°C., but drying temperatures of about 500°-600°C. generally being required for optimum results when the inorganic oxide is alumina. The time required for drying of the inorganic oxide varies, of course, with the particular drying temperature used but is usually in the range of about 5-16 hours.

When the inorganic oxide has been substantially freed of adsorbed water, its surface hydroxyl groups may be reacted with the organometallic compound in any suitable manner, conveniently by (1) adjusting its temperature, if necessary, to the temperature at which the reaction with the organometallic compound is to be conducted, (2) slurrying it in an inert liquid hydrocarbon, generally a $C_4$-$C_8$ hydrocarbon, such as

isobutane, pentane isopentane hexane, cyclohexane, heptane isooctane, etc., and mixtures thereof with one another and/or with other materials commonly present in commercial distillation cuts having the desired boiling range, (3) adding a substantially stoichiometric amount of the organometallic compound in neat or solution form, and (4) maintaining the organometallic compound in intimate contact with the inorganic oxide, e.g., by agitating the slurry, for a time sufficient to ensure substantially complete reaction with the available hydroxyl groups, generally at least about 5 minutes. The reaction may be conducted with or without pressure and at ambient or reflux temperatures, depending on the particular organometallic compound employed as will be readily understood by those skilled in the art. When the organometallic compound is added in solution form, it is generally preferred though not required, that the solvent be the same inert liquid hydrocarbon as is already present in the slurry.

The reaction of the vanadium component with the treated support may also be accomplished by conventional means, such as any of the techniques described in GB-A-489,410. However, it is most desirably accomplished simply by adding the vanadium compound in neat or solution form to the slurry of treated support and maintaining it in intimate contact with the treated support for a time sufficient to provide for substantially complete reaction, usually at least about 5 minutes and preferably about 10-60 minutes, although, actually, the reaction is virtually instantaneous.

Commercial preparation of the catalyst of this invention is preferably carried out as taught by Rogers in U.S. Patent No. 4,426,317.

After the catalyst composition is prepared, it is subsequently introduced into a gas-phase fluidized reactor in a manner similar to that taught, for a different catalyst, by Miller in US-A-4,003,712. In a preferred embodiment of the invention, the diameter of the velocity reduction or disengaging zone at the top of Miller's reactor is enlarged and the cyclone and filter in the gas recycle system are eliminated for stable, long-term commercial operation. It should be understood that polymerization with the catalyst compositions of this invention may be conducted in any fluidized system which as a distribution plate means and allows a monomer gas to fluidize a bed including the catalyst compositions; allows unreacted monomer gas to be recycled from the top of the fluidized system back to the bottom of the fluidized system or for admixing with the monomer gas prior to its diffusing or passing through the fluidized bed; allows a polymer product to be withdrawn from the fluidized bed; allows catalyst and a trialkylaluminum to be added to the fluidized at different locations; and provides for the removal of the heat of polymerization. Size, shape, pressure rating, heat removal capability, and other factors can limit the polymer production capacity of the gas-phase fluidized-bed reaction systems of this invention. The process of this invention may be practiced in commercial facilities having production capacities of 50,000 to 250,000 metric tons per year or more. The process of this invention may also be practiced in laboratory scale reactors having a production capacity of from 0.1 to 1.0 kg/hr or in pilot plant reactors having production capacities of from 5 to 500 kg/hr.

A catalyst composition is fed into the fluidized bed system at a point of between about 1/8 to about 1/2 of the height of the fluidized bed. Injection of the catalyst composition above about 1/8 of the height of the bed as opposed to below 1/8 of the height) offers distribution of the catalyst composition throughout the entire ongoing fluidized bed to retard and/or preclude the formation of localized spots of high catalyst composition concentration which would result in the formation of "hot spots" at or near the distribution plate. A "hot spot" is a localized region in which the exothermic heat of polymerization a not dissipated before some polymer heats to the softening point of the polymer.

We have found that the rate of injection of the catalyst for our polymerization process is generally preferably at a rate that maintains the concentration of the vanadium in the fluidized bed between about 0.1 ppm to about 50 ppm based on weight of vanadium metal divided by total solids in the bed. More preferably, the rate or injection of the catalyst is that which would maintain the concentration of the vanadium in the fluidized bed between about 0.50 ppm to about 10 ppm; most preferably, between about 1 ppm to about 4 ppm. The fluidized bed is substantially particulate polymerized ethylene polymer particles formed by polymerization of the monomer(s) on the catalyst compositions.

In order for the catalyst composition to give high yield of polymer product per unit of vanadium component, we have discovered that it is necessary to add or inject at least one trialkylaluminum compound into the fluidized bed system as a co-catalysts. For a variety of reasons, it is preferred to add the trialkylaluminum compound, or the mixture of trialkylaluminum compounds, that is being used as a co-catalyst directly to the fluidized bed separately and independently of the catalyst and at an injection point removed from the catalyst injection point. The trialkylaluminum compounds may be fed to the fluidized bed as pure compounds, or in solution in a liquid hydrocarbon which will vaporize in the fluidized bed. Suitable hydrocarbon solvents include, but are not limited to, isobutane, isopentane, hexane, heptane and mixtures thereof.

The trialkylaluminum may be any trialkylaluminum wherein the alkyl or combination of alkyl groups contain between 1 and 36 carbon atoms. In a preferred embodiment of the invention, the alkyl group or combination of alkyl groups contain between 1 and 12 carbon atoms. Suitable trialkylaluminum compounds have been found to include trimethyl-, triethyl, - tri-i-butyl-, tri-n-hexyl-, tri-n-octyl- and ethyl di-i-butylaluminum. It should be understood that trialkylaluminum compounds add ethylene, and alpha olefins to some extent, under the operating temperatures and pressures of the polymerization process of the inventon. Thus, an ethyl group on aluminum may be inserted by ethylene to become a butyl group, etc. Therefore, there is no reason to believe or require that all alkyl groups on the aluminum be the same. There is every reason to believe that mixtures of trialkylaluminum compounds are generated during polymerization and are as effective as pure compounds. Since the exact composition of the alkyl groups on aluminum during the polymerization process of this invention is not known because of the ethylene insertion reaction, all of the trialkylaluminum species in the fluidized bed are referred to collectively for the purposes herein as "trialkylaluminum".

Polymer productivity from the polymerization process is not only determined by the rate of catalyst injection, but also from the rate of trialkylaluminum injection.

Assuming that the trialkylaluminum compounds of this inventionremain in the fluidized bed and assuming uniform distribution of trialkylaluminum throughout the fluidized bed, the molar concentration of trialkylaluminum may be calculated from the molar feed rate of the trialkylaluminum being fed into the fluidized bed reaction system and the withdrawal rate of the polymer product particles. Likewise, assuming uniform distribution of the catalyst composition throughout the fluidized bed, the molar concentration of the vanadium component of the catalyst composition may be calculated from the molar feed rate of the vanadium component of the catalyst composition being fed into the fluidized bed reaction system and the withdrawal rate of the polymer product particles. At stable, lined-out operating conditions, the ratio of the molar concentration of the trialkylaluminum to the molar concentration of the vanadium component in the bed of catalyst composition will asymptote to the ratio of the molar feed rate of the trialkylaluminum to the molar feed rate of the vanadium components of the catalyst composition of this invention. The injection rate of the trialkylaluminum is such that the ratio in the fluidized bed of the molar concentration of the trialkylaluminum to the molar concentration of the vanadium component is between about 1 to about 5,000. We have found that the activity of the catalyst composition is maximized in a certain range of trialkylaluminum to vanadium molar ratio. Too little or too much trialkylaluminum suppresses the activity of the catalyst composition and the polymer production. It has been determined that a plot of the trialkylaluminum to vanadium molar ratio versus the catalyst activity possesses a generally flat peak and the optimum trialkylaluminum to vanadium molar ratio lies in the range of from about 2 to about 500, with from about 2 to 60 being the most preferred from the standpoint of minimizing catalyst residue levels in the polymer and trialkylaluminum cost. Therefore, the preferred injection rate of the trialkylaluminum into the fluidized bed system of this invention is that injection rate wherein the molar ratio in the fluidized bed of the molar concentration of the trialkylaluminum to the molar concentration of the vanadium composition is between about 2 to 500, and most preferably from about 2 to about 60.

Although the catalyst compositions and the trialkylaluminum of this invention polymerize ethylene and other olefins over a wide range of temperatures, there is a practical limitation to the temperatures at which the gas-phase fluidized-bed process of this invention is commercially viable. For example, above about 120 $^\circ$ C, ethylene polymers soften and tend to agglomerate in a fluidized bed, leading to formation of lumps, loss of fluidization, and onset of an inoperable condition. Below about 50 $^\circ$ C, the production rate of commercial reactors becomes so low that the process is no longer profitable. It is generally desirable to operate near the highest temperature at which the polymer will not agglomerate in the bed with a temperature safety factor for small temperature upsets so that inoperable conditions are not encountered even briefly. Therefore, the preferred temperature range is from about 65-115 $^\circ$ C, with the range from about 75-110 $^\circ$ C being most preferred.

The pressure at which the polymerization process of this invention is in a commercial operating range of 0.7 - 4.2 MPa. At the lower pressures, however, higher dwell or residence times in the reactor are required to reach high yields of polymer per unit of catalyst. At the higher pressures, there is little room to safely accommodate pressure upsets. These constraints lead to a preferred pressure range of 1.6 - 3.9 MPa.

In order to provide sufficient mixing and agitation in the bed of trialkylaluminum and catalyst such that "hot spots" will not develop, it is necessary that the flow rate of the gas mixture through the bed of polymer particles containing traces of the catalyst and the trialkylaluminum be sufficient to fluidize the particles. For the powdered polymer particles produced by the catalyst compositions of this invention, the minimum fluidization velocity, $G_{mf}$, has been determined to be about 15 cm/sec. As gas velocity increases, a point is reached at which the particles are largely swept out of the bed by the force of the rising gas (the transport velocity), which, for the particles of the present invention is about 4 $G_{mf}$, or 60 cm/sec. To provide some margin for operating error, the preferred velocity range is about 1.5 - 3.0 $G_{mf}$, or about 23 - 45 cm/sec, in contrast to the 3 - 5 $G_{mf}$ range preferred by Miller in U.S. Patent No. 4,003,712 for his catalysts.

The catalysts would, under the commercial conditions described above, in the absence of a chain transfer agent, produce polymer of a molecular weight too high for conventional melt processing. Therefore, in the commercial practice of this invention the fluidizing gas mixture must contain hydrogen during polymerization to adjust the molecular weight (as determined by melt index) to the desired range for the product being produced. This is done by increasing the hydrogen/ethylene ratio to raise melt index (lower molecular weight), or reducing the ratio to produce the opposite effect. The catalyst compositions of this invention are sensitive to hydrogen, so it is generally not necessary to use more tan 10% by vol. of hydrogen even to produce the highest melt index polymer. Furthermore, when used as described herein, altering the hydrogen/ethylene ratio to increase melt index does not cause a loss of production rate in a commercial plant within the range of melt indexes used for commercial polymers at this time. Preferably, the amount of hydrogen utilized in a preferred embodiment of the invention in order to control the molecular weight of the produced polymer is between about 0.10 % to about 10.0 % by volume of the total gas mixture volume.

The gas mixture has to have chloroform in order that the catalyst compositions can have their activity promoted. While other halogenated carbon compounds such as methylene chloride and fluorotrichloromethane may work as promoters, from the standpoints of promotion of catalyst activity, cost, availability, ease of handling, and catalyst promotion without causing reactor fouling, chloroform is clearly the compound of choice. Only small amounts are needed because of its effectiveness. Under the conditions of polymerization, it is a gas, and generally will be present in the recycle gas at concentrations between about 0.0001 to about 1.000 % by vol of the gas mixture. Since the preferred vol % ranges for hydrogen and chloroform is respectively between about 0.10 and about 10.0 and between about 0.0001 and about 1.000, the remaining vol % for any given volume of the gas mixture would include ethylene and any of the inert gas which is used to feed the catalyst compositions to the fluidized bed in the reaction zone. In a preferred embodiment of the invention, ethylene preferably comprises between about 50.0 vol % and about 99.9 vol % of the gas mixture.

It appears that the molar ratio $CHCl_3/V$ is more useful in predicting and understanding its effect than the overall concentration in the gas, since it affects the catalyst's performance. The $CHCl_3/V$ ratio may vary from about 2 to about 5000. Because chloroform is relatively inexpensive and used in small amounts, there is no real economic incentive to minimize its use. However, there appears to be a maximum in the curve of catalyst activity vs. $CHCl_3/V$ ratio, with a broad optimum n the range of about 10 - 500. There also appears to be an interaction between the optima for $CHCl_3/V$ ratio and A1/V ratio such that lower $CHCl_3/V$ ratios are generally preferred when the A1/V ratio is low, and higher $CHCl_3/V$ ratios are generally preferred when the A1/V is high. Other factors, such as impurity levels, may also cause a shift in the optimum $CHCl_3/V$ ratio or A1/V ratio, but generally such factors will not shift the optima outside the preferred ranges.

We have found that, in order to control the density of the produced ethylene polymer, the gas mixture of ethylene, hydrogen and chloroform may include alpha olefins which will be copolymerized with the ethylene of the gas mixture. Although the catalyst compositions will copolymerize essentially any alpha olefin with ethylene, there is a practical limit to what can be effectively done in a gas-phase reaction. Generally, olefins having more than 8 carbon atoms have too low a vapor pressure to be used in high enough concentration to have much effect on density. Propylene, butene-1, hexene-1, 4-methylpentene-1, and octene-1 are among the alpha olefins useful in copolymerization with ethylene in this invention. Preferably, mixtures of alpha olefins having 3 to 8 carbon atoms are used in a preferred embodiment of this invention. By this process, polymers generally considered to be HDPE (densities of 0.940 or greater) and LLDPE (densities below 0.940) may be made equally well by adjusting comonomer concentration in the feed or other factors. The amount of comonomer needed is determined by the density of the polymer product being made. Generally, not less than 0.5 vol % of alpha olefin will be used and not more than 30 vol % of the alpha olefin will be utilized for any given volume of the gas mixture along with any of the inert gas and between about 0.10 vol % and about 10.0 vol % of hydrogen, between about 0.0001 vol % and about 1.000 vol % chloroform, and between about 50.0 vol % and about 99.4 vol % ethylene.

The catalyst compositions are preferably fed to the gas-phase fluidized-bed reactor as a dry particulate matter, such as dry powder under the inert gas. Any gas that does not react with the catalyst is considered inert. Suitable inert gases include nitrogen, argon, and methane. Any device which can measure and convey a free-flowing powder is suitable for feeding the catalyst, although the device must not allow monomer to enter the catalyst storage area of the feed device. Once the catalyst has been measured and delivered to the catalyst feed line, any good method of conveying it to the fluidized bed may be used. These include mechanical means such as screw conveyers, or gas conveying with inert gas or, as Miller teaches, with recycle gas from the reactor. Catalyst may be added continuously, semi-continuously, or discontinuously to the reactor. Continuous addition is preferred, but is virtually impossible at laboratory scale. Catalyst may be fed pure or may be diluted with any free-flowing particulate material such as pure, dry support or polymer powder from the reactor. In catalyst feeding, all that is really critical is that the catalyst be fed at a controlled rate and be dispersed in the bed before a "hot spot" develops.

The produced particulate polymerized substantially ethylene particles may be removed from the gas-phase reaction zone by any suitable means and at any suitable location. Preferably, the produced ethylene polymer particles are removed in accordance with the procedure described by Miller in US-A-4,003,712. In a preferred embodiment of the invention, the produced ethylene polymer particles are removed from the gas-phase reaction zone above and in proximity to the distribution plate.

As has been mentioned, it is necessary to have good fluidization, good catalyst mixing, and good distribution of gas in the bed in order to avoid "hot spots" which cause lumps to form in the bed. These lumps themselves disturb fluidization so, once a lump forms, the tendancy for other lumps to form is enhanced. Eventually a reactor shut dawn is necessary because the process becomes inoperable.

Similarly, it is necessary for long-term, stable operation of commercial reactors that the surfaces of the reactor and distribution place remain clean. If a polymer coating (fouling) builds up on a reactor surface, several undesirable things may happen. First, fouling on the distribution plate tends to perturb the desired gas distribution and restrict the ability of the polymer particles at the plate to move laterally. Both effects tend to produce "hot spots" at or near the distribution plate. Second, fouling on the reactor wall inhibits the normal downward motion of fluidized particles at the wall surface. Particles which "hang up" at a wall surface can generate "hot spots". Third, the wall coating may come loose in places, fall into the bed, and disrupt fluidization as any lump would do. Even worse, wall fouling usually is in the form of a "sheet" rather than a lump, and produces severe gas channelling in the bed if it falls off.

Although poor selection of operating conditions or poor operating techniques may lead to lump formation, it appears that fouling of reactor surfaces depends primarily on the catalyst used. Some catalysts tend to produce fouling, and some do not. At this time, insufficient experience has been gained to be able to predict with accuracy which catalyst compositions will foul and which will give stable operation for months without fouling reactor surfaces. Obviously, for economical commercial operation, the catalyst must not foul reactor surfaces. Fouling in a commercial reactor leads to "down time" with consequent loss of production and extra maintenance cost for cleaning. Thus, fouling will cause a gas-phase fluidized-bed process to lose its economic advantage over slurry processes.

The following examples are given to illustrate the invention and are not intended as a limitation thereof. In these examples, compositions and processes that are illustrative of the invention are distinguished from those that are outside the scope of the invention and are included only for comparative purposes by using an alphabetic designation for any example or run that is a comparative example and a numeric designation for the examples and runs that are illustrative of the invention. Yields given in the examples are measures of productivity in terms of the number of grams of polymer produced per gram of catalyst per hour, melt indices ($MI_2$) are those determined by ASTM test D-1238-65T using a 2160-gram weight, while the NVR values are "normalized" melt viscosity ratios determined by measuring The apparent viscosities of the polymers at 30 sec$^{-1}$ and 300 sec.$^{-1}$, respectively, at 200° C. in an Instron capillary rheometer and (2) normalizing them to $V_{30} = 5$ by the equation.

$$NVR = antilog (0.14699 + 0.7897 \log V_{30} - \log V_{300})$$

where $V_{30}$ and $V_{300}$ are the measured apparent viscosities. This normalization permits comparison of the viscosity ratios of polymers having different $V_{30}$ values, since the unnormalized $V_{30}/V_{300}$ ratio is a function of $V_{30}$. The NVR is constant for any given catalyst over an $MI_2$ range of about 1-30, and only slight deviations occur outside of that range.

In the numbered examples, the following procedures within the invention are used to prepare the polymers. Lettered examples are not within the invention.

EXAMPLE I

A batch of catalyst having the composition 1.4 mmol triethylaluminum, 0.2 mmol $VCl_4$, 0.5 mmol n-octanol per gram $SiO_2$ was prepared as a dry powder according to the general procedure of Rogers, US-A-4,426,317. Gas phase copolymerization was carried out in a small pilot plant similar in design to the laboratory gas phase reactor except that there was no separator in the gas recycle line. The reactor had a

8

EP 0 197 689 B1

reaction zone 30 cm in diameter, about 2 m tall. This run was conducted at 2.0 MPa and 81° C average bed temperature with a recycle gas flow of about 1100 kg/hr which gave a gas velocity in the bed of about 30 cm/sec. The recycle gas stream consisted essentially of 84.4% ethylene, 3.8% hydrogen, 9.3% butene-1 and 2.5% nitrogen. Catalyst was added with nitrogen to the fluidized bed at am average rate of 7.5 $cm^3$/hr, triethylaluminum (TEA) was added as a 10% solution in hexane at a rate of 4.9 cc/hr, and chloroform was added at a rate of 1.4 $cm^3$/hr. A film-grade polymer having a melt index of 1.4, a density of 0.934, and a total ash content of 600 ppm was produced at am average rate of about 7 kg/hr during 8 hours of steady operation.

EXAMPLE A

At the conclusion of Example I the hydrogen feed is discontinued while everything else is maintained essentially unchanged. Gradually, the hydrogen/ethylene ratio drops, as determined by an on-line gas analyzer, as recycle gases are lost from the reaction zone through purge to the instruments and by being removed with the polyethylene product with no fresh hydrogen being added to the make-up gases. As the hydrogen level in the recycle gas decreases, the polymer melt index drops until it is unmeasurably low. The polymerization rate, as determined by ethylene uptake and by product removal from the reaction zone, is unchanged within experimental error. There is no external evidence of reactor fouling. Hydrogen flow is then restarted, and the original hydrogen/ethylene ratio re-established. Within 15 hours, the melt index is again 1.4 and the polymer is again useful for film.

The chloroform feed is then discontinued, all other variables being held as constant as possible. Gradually, the $CHCl_3$/V ratio decreases as the $CHCl_3$ concentration in the recycle gas becomes lower due to loss of recycle gas from the system and the make-up gases being promoter-free. There is no significant change in the melt index of the polymer, but the polymerization rate drops and the ash content of the polymer increses to about 3000 ppm, too nigh for good quality film. The chloroform feed is then restarted at its original feed rate. Polymerization rate picks up immediately, as judged from an increase in both bed temperature and polymer powder production, and reaches a level of about 10 kg/hr, after which the rate slowly declines and lines out at about 7 kg/hr. About 36 hours after chloroform is readmitted to the reaction, the reaction and polymer are restablized at the original conditions and the polymer is again useful for film.

Then the triethylaluminum feed is stopped, all other variables being held as constant as possible. The polymerization rate begins to decrease, slowly at first, and then rapidly. The ash content of the polymer increases correspondingly. When the polymerization rate reaches about 1 kg/hr, the reaction is terminated intentionally, and the reactor opened for inspection. There is no visible coating or fouling on the distribution plate or reactor walls.

This example illustrates that trialkylaluminum, chloroform and hydrogen, in the proper proportions, are essential to useful practice of this invention.

EXAMPLE II

The general procedure of Example I was repeated except that the catalyst had the formulation of the catalyst of Example XII run 22 of US-A-4435518 and propylene was the comonomer. Polymerization pressure was about 2.1 MPa, and average bed temperatures were in the range of 78 - 82 degrees C. The other run conditions and corresponding polymer properties obtained are given in Table I. Each run in Table I represents a different condition of reasonably stable, operation during a 7-day period of continuous operation. At the end of the 7-day period, the reactor was shut dawn by failure of the polymer withdrawal system. There was no evidence of fouling of reactor walls or the distribution plate.

TABLE I

| Run # | 38 | 39 | 40 | 41 | 42 |
|---|---|---|---|---|---|
| Recycle gas composition: | | | | | |
| % Ethylene | 61.6 | 63.0 | 68.0 | 58.9 | 61.0 |
| % Hydrogen | 1.1 | 1.5 | 1.3 | 1.0 | 1.0 |
| % Propylene | 12.4 | 11.4 | 7.4 | 11.9 | 11.4 |
| % Nitrogen | 24.9 | 24.1 | 23.3 | 28.2 | 26.6 |
| % Chloroform | 0.007 | 0.0098 | 0.0073 | 0.012 | 0.015 |
| Flow Rates: | | | | | |
| Catalyst (cc/hr) | 5.3 | 4.6 | 2.6 | 3.3 | 3.8 |
| TEA (cc/hr) | 3.1 | 3.0 | 3.7 | 3.6 | 3.9 |
| Production (kg/hr) | 2.1 | 3.4 | 1.5 | 2.0 | 2.2 |
| Polymer properties: | | | | | |
| MI (dg/min) | 1.1 | 0.87 | 0.76 | 0.90 | 0.48 |
| Density (g/cm$^3$) | 0.916 | 0.917 | 0.920 | 0.919 | 0.915 |
| Ash, ppm | 390 | | 367 | 340 | 347 |
| V residue, ppm | 1.6 | 0.9 | 1.1 | 1.1 | 1.1 |

EXAMPLE III

Three samples of narrow molecular weight distribution ethylene copolymers were made in a larger gas-phase fluidized-bed pilot plant polymerization system. The reaction zone was 46 cm in diameter and about 3 m tall. It was topped by a disengaging zone of 92 cm diameter. Gas recycle piping led from the disengaging zone through a heat exchanger and recycle gas blower to the bottom of the reactor. A distribution plate at the bottom of the reactor served to disperse or distribute the gas evenly at the bottom of the bed. Gas analyzers monitored the gas composition of the recycle system and, via suitable instrumentation, automatically adjusted flows of feed streams to keep the gas composition constant. Catalyst was fed directly to the bed with an automatic catalyst feeder using nitrogen as the motive gas to convey the catalyst into the bed. Triethylaluminum (TEA) was pumped directly into the bed. Polymer powder was automatically withdrawn to maintain a constant inventory of powder in the reactor. For all three samples, reaction pressure was about 3.5 MPa, average bed temperature ws about 92 degrees C, and the recycle gas rate was about 4525 kg/hr, which gave a gas velocity in the bed of about 30cm/sec. Average reaction conditions during the time each sample was collected and results for each sample are given in Table II

Catalysts for these runs were made essentially as taught by Rogers US-A-4,426,317. For runs 43 and 44, the catalyst composition was 1.5 mmol tri-n-hexylaluminum, 0.1 mmol n-octadecyloxyvanadium oxydichloride and 1.0 mmol n-hexanol per gram of dry silica support. For run 45, the catalyst had the composition of 2.25 mmol tri-n-hexylaluminum, 0.2 mmol n-octadecyloxyvanadium oxydichloride and 1.0 mmol n-hexanol per gram of dry silica. There was no evidence of reactor fouling after any of the runs.

TABLE II

| Run # | 43 | 44 | 45 |
|---|---|---|---|
| Recycle Gas Composition: | | | |
| % Nitrogen | 5.6 | 5.9 | 6.8 |
| % Ethylene | 86.1 | 85.1 | 84.8 |
| % Hydrogen | 4.4 | 5.1 | 5.3 |
| % Propylene | 3.9 | 3.9 | 3.1 |
| % Chloroform | 0.070 | 0.085 | 0.080 |
| Other Polymerization data: | | | |
| Al/V ratio | 42 | 29 | 26 |
| $CHCl_3$/V ratio | 123 | 305 | 112 |
| Production (kg/hr) | 15 | 13 | 13 |
| Polymer properties: | | | |
| MI (dg/min) | 2.2 | 4.5 | 2.1 |
| Density (g/cm$^3$) | 0.953 | 0.954 | 0.954 |
| Ash, ppm | 702 | 694 | 323 |
| V residue, ppm | 2.9 | 3.1 | 2.9 |

EXAMPLE IV

A commercial gas-phase fluidized-bed polymerization is carried out in a polymerization system of the same general description as the pilot plant of example III However, the reaction zone is 3.6 m in diameter and about 15 m tall. Recycle gas rate is sufficient to give a gas velocity in the bed of about 30 cm/sec. The polymerization is conducted at 3.5 MPa pressure and 93 degrees C average bed temperature with a feed stream targets of 6.0 vol % nitrogen, 85.0% ethylene, 3.9 % propylene, 5.1 % hydrogen, and 0.07 % chloroform. The catalyst has the formulation 1.4 mmol triethylaluminum, 0.1 mmol undecyloxyvanadium oxydichloride, 1.0 mmol n-octanol and is made in commercial batches of 450 kg each. The Al/V ratio during polymerization varies slightly as monomer purity varies, but is in the range of 10 to 30.

The polymer, produced at a rate of about 8.5 metric tons per hour, is an injection molding grade, has an average melt index of 5, an average density of 0.954, and an NVR of 1.9 plus or minus 0.1 This product is made in commercial runs of two weeks or longer without evidence of reactor fouling.

Similar results in the narrowing of the molecular weight distributions of ethylene polymers are obtained when the examples are repeated except that the catalyst components, component proportions, comonomers, comonomer proportions, and/or polymerization conditions specified in the examples are replaced with catalyst components component proportions, comonomers, comonomer proportions and/or polymerization conditions taught to be their equivalents in the specification.

**Claims**

1. A process of polymerizing a monomer charge including ethylene, chloroform and hydrogen in a gas-phase, fluidized bed, reaction zone which has distribution plate means, which comprises a bed of particulate substantially polymerized ethylene particles and is under operating conditions for polymerizing ethylene using the monomer charge, the process comprising the steps of:

a) drying an inorganic oxide having surface hydroxyl groups to form a support that is substantially free of adsorbed water;

b) reacting the surface hydroxyl groups of the support with at least a substantially stoichiometric amount of at least one organometallic compound corresponding to the formula $R_xMR'_yR''_z$, wherein M is a metal of Group III of the periodic table, R is an alkyl group containing 1 to 12 carbon atoms,

11

R' and R'' are independently selected from the group consisting of H, Cl, and alkyl and alkoxy groups containing 1 to 12 carbon atoms, x has a value of 1 to 3, and y and z each can have a value of 0 to 2 and the sum of y and z is not greater than 3-x, to provide a treated support;

c) reacting the thus-treated support with at least about 0.001 mol, per mol of organometallic compound, of at least one vanadium compound corresponding to a formula selected from $(RO)_nVOX_{3-n}$ and $(RO)_mVX_{4-m}$, in which formulas R represents a $C_1$-$C_{18}$ monovalent hydrocarbon radical that is free of aliphatic unsaturation, X is Cl or Br, n has a value of 0 to 3, and m has a value of 0 to 4;

d) reacting the product of step (c) with at least about 0.1 mol, per mol of organometallic compound, of an alcohol containing 1 to 18 carbon atoms;

e) feeding the product of step (d) into a gas-phase reaction zone in order to form part of the bed in the fluidized-bed reaction zone;

f) feeding, separately and independently of said feeding step (e) and at a different location, a trialkylaluminum into the gas-phase reaction zone such that said bed in the gas-phase reaction zone comprises the product of step (d), the trialkylaluminum, and particulate substantially polymerized ethylene particles, this feeding being at a rate such as to maintain in the fluidized bed of step (g) a ratio of the molar concentration of trialkylaluminum to the molar concentration of the vanadium in the $(RO)_nVOX_{3-n}$ or $(RO)_mVX_{4-m}$ of from 1 to about 5,000;

g) fluidizing the bed of step (f) at a pressure of from about 0.7 to about 4.2 MPa and a temperature of from about 50° to about 120° C. by diffusing underneath the bed of step (f) through the distribution plate means a gas mixture comprising ethylene, hydrogen, and chloroform at a rate sufficient to give a linear gas velocity in the bed of step (f) of from about 15 to about 60 cm/sec. and to give a molar ratio of chloroform to the vanadium component in the $(RO)_nVOX_{3-n}$ or $(RO)_mVX_{4-m}$ of from about 2 to about 5,000, and the feeding of step (e) taking place at a position from about 1/8 to 1/2 of the height of the fluidized bed above the distribution plate means;

h) removing particulate substantially polymerized ethylene particles from the reaction zone above and near to the distribution plate means, the particles having a narrow-to-intermediate molecular weight distribution; and

i) recycling unreacted gas from step (g) from the top of the reaction zone to the bottom of the reaction zone to below the distribution plate means.

2. A process according to any one of the preceding claims wherein the gas mixture comprises from about 50 to about 99.9% by volume of ethylene, from about 0.10 to about 10.0% by volume of hydrogen, and from about 0.0001 to about 1.000% by volume chloroform.

3. A process according to any one of the preceding claims, wherein the gas mixture fed in step (g) additionally comprises an alpha olefin.

4. A process according to claim 3 wherein said gas mixture comprises from about 0.5 to about 30.0 vol % alpha olefin, from about 50.0 to about 99.4 vol % ethylene, from about 0.1 to about 10.0 vol % hydrogen, and from about 0.0001 to about 1.0 vol % chloroform.

5. A process according to claim 3 or claim 4 wherein said alpha olefin is propylene, butene-1, hexene-1, 4-methyl-pentene-1, or octene-1.

6. A process according to any one of the preceding claims wherein:
   the drying in step (a) is at a temperature of from about 100° to about 1000° C., the dried inorganic oxide being then cooled to ambient temperature;
   at least one of the organometallic compound(s) of step (b) is a compound of the formula RAIR'R'';
   the trialkylaluminum of step (f) is triethylaluminum or tri-n-hexylaluminum and is fed in a liquid hydrocarbon which is isobutane, iso-pentane, hexane or heptane; and
   unreacted gas mixture of step (g) is recycled from the top of the reaction zone, through a heat exchanger means, and into the bottom of the reaction zone from underneath said distribution plate means.

7. A process according to any one of the preceding claims wherein the molar ratio of chloroform to the vanadium component is from about 10 to about 500.

**8.** A process according to any one of the preceding claims wherein the feeding step (e) includes feeding the product of step (d) as a dry powder under an inert gas.

**9.** A process according to any one of the preceding claims wherein the feeding step (e) comprises feeding the product of step (d) into the gas-phase reaction zone without washing the catalyst product.

**10.** A process according to any one of the preceding claims wherein the rate of feed of the product of step (e) into the gas-phase reaction zone is such as to maintain the concentration of the vanadium in the bed of from about 0.10 to about 50 ppm.

**11.** A process according to any one of the preceding claims wherein the inorganic oxide is alumina, and said drying temperature for said alumina is from about 500° to about 600° C.

**Revendications**

**1.** Procédé de polymérisation d'une charge de monomère incluant de l'éthylène, du chloroforme et de l'hydrogène dans une zone de réaction, en lit fluidisé, en phase gazeuse, qui a des moyens formant plaque de distribution, qui comprend un lit de particules d'éthylène essentiellement polymérisées particulaires et qui est sous les conditions d'opération pour la polymérisation de l'éthylène utilisant la charge de monomère, le procédé comprenant les étapes de :

a) sécher un oxyde inorganique ayant des groupements hydroxyles de surface pour former un support qui est essentiellement exempt d'eau adsorbée;

b) faire réagir les groupements hydroxyles de surface du support avec au moins une quantité essentiellement stoechiométrique d'au moins un composé organométallique correspondant à la formule $R_xMR'_yR''_z$, où M est un métal du groupe III du tableau périodique, R est un groupement alkyle contenant de 1 à 12 atomes de carbone, R' et R'' sont indépendamment sélectionnés dans le groupe consistant en H, Cl, et des groupements alkyle et alkoxy contenant de 1 à 12 atomes de carbone, x a une valeur de 1 à 3 et y et z peuvent chacun avoir une valeur de 0 à 2 et la somme de y et z n'est pas supérieure à 3-x, pour fournir un support traité;

c) faire réagir le support ainsi traité avec au moins environ 0,001 mole, par mole de composé organométallique, d'au moins un composé de vanadium correspondant à une formule sélectionnée parmi $(RO)_nVOX_{3-n}$ et $(RO)_mVX_{4-m}$, dans lesquelles R représente un radical d'hydrocarbure monovalent $C_1$-$C_{18}$ qui est sans insaturation aliphatique, X est Cl ou Br, n a une valeur de 0 à 3 et m a une valeur de 0 à 4;

d) faire réagir le produit de l'étape (c) avec au moins environ 0,1 mode, par mode de composé organométallique, d'un alcool contenant de 1 à 18 atomes de carbone;

e) alimenter le produit de l'étape (d) dans une zone de réaction en phase gazeuse pour former une partie du lit dans la zone de réaction du lit fluidisé;

f) alimenter, séparément et indépendamment de l'étape d'alimentation précitée (e) et en un lieu différent, un trialkylaluminium dans la zone de réaction en phase gazeuse de telle manière que le lit précité dans la zone de réaction en phase gazeuse comprenne le produit de l'étape (d), le trialkylaluminium, et des particules d'éthylène essentiellement polymérisées particulaires, cette alimentation étant à une vitesse telle qu'elle maintient dans le lit fluidisé de l'étape (g) un rapport de la concentration molaire du trialkylaluminium à la concentration molaire du vanadium dans le $(RO)_nVOX_{3-n}$ ou $(RO)_mVX_{4-m}$ de 1 à environ 5000;

g) fluidiser le lit de l'étape (f) à une pression d'environ 0,7 à environ 4,2 MPa et à une température d'environ 50° a environ 120° C en diffusant sous le lit de l'étape (f) par des moyens formant plaque de distribution, un mélange de gaz comprenant de l'éthylène, de l'hydrogène, et du chloroforme à une vitesse suffisante pour donner une vitesse linéaire du gaz dans le lit de l'étape (f) d'environ 15 à environ 60 cm/s et pour donner un rapport molaire du chloroforme au composant de vanadium dans le $(RO)_nVOX_{3-n}$ ou $(RO)_mVX_{4-m}$ d'environ 2 à environ 5000, et l'alimentation de l'étape (e) prenant place à une position d'environ 1/8 à 1/2 de la hauteur du lit fluidisé au-dessus des moyens formant plaque de distribution;

h) retirer les particules d'éthylène essentiellement polymérisées particulaires de la zone de réaction au-dessus et à côté des moyens formant plaque de distribution, les particules ayant une distribution de poids moléculaire étroite à intermédiaire; et

i) recycler le gaz qui n'a pas réagi de l'étape (g) du haut de la zone de réaction au bas de la zone de réaction à en-dessous des moyens formant plaque de distribution.

**2.** Procédé selon l'une quelconque des revendications précédentes, où le mélange de gaz comprend d'environ 50 à environ 99,9% en volume d'éthylène d'environ 0,10 à environ 10,0% en volume d'hydrogène et d'environ 0,0001 à environ 1,000% en volume de chloroforme.

**3.** Procédé selon l'une quelconque des revendications précédentes, où l'alimentation du mélange de gaz dans l'étape (g) comprend de plus une alpha oléfine.

**4.** Procédé selon la revendication 3, où le mélange de gaz précité comprend d'environ 0,5 à environ 30,0% en volume d'alpha oléfine, d'environ 50,0 à environ 99,4% en volume d'éthylène, d'environ 0,1 à environ 10,0% en volume d'hydrogène, et d'environ 0,0001 à environ 1,0% en volume de chloroforme.

**5.** Procédé selon la revendication 3 ou la revendication 4, où l'alpha oléfine précitée est le propylène, le butène-1, l'hexène-1, le 4-méthyl-pentène-1, ou l'octène-1.

**6.** Procédé selon l'une quelconque des revendications précédentes, où
le séchage de l'étape (a) est à une température d'environ 100˚ à environ 1000˚C,
l'oxyde inorganique séché étant ensuite refroidi à température ambiante;
au moins un des composé(s) organométallique(s) de l'étape (b) est un composé de formule RAIR'R'';
le trialkylaluminium de l'étape (f) est le triéthylaluminium ou le tri-n-hexylaluminium et est alimenté dans un hydrocarbure liquide qui est l'isobutane, l'iso-pentane, l'hexane ou l'heptane; et
le mélange de gaz qui n'a pas réagi de l'étape (g) est recyclé du haut de la zone de réaction à travers des moyens échangeurs de chaleur et dans le bas de la zone de réaction à partir du dessous des moyens formant plaque de distribution.

**7.** Procédé selon l'une quelconque des revendications précédentes, où le rapport molaire du chloroforme au composant de vanadium est d'environ 10 à environ 500.

**8.** Procédé selon l'une quelconque des revendications précédentes, où l'étape d'alimentation (e) inclut l'alimentation du produit de l'étape (d) sous la forme d'une poudre sèche sous gaz inerte.

**9.** Procédé selon l'une quelconque des revendications précédentes, où l'étape d'alimentation (e) comprend l'alimentation du produit de l'étape (d) dans la zone de réaction en phase gazeuse sans lavage du produit catalyseur.

**10.** Procédé selon l'une quelconque des revendications précédentes, où la vitesse d'alimentation du produit de l'étape (e) dans la zone de réaction en phase gazeuse est telle qu'elle maintient la concentration du vanadium dans le lit d'environ 0,10 à environ 50 ppm.

**11.** Procédé selon l'une quelconque des revendications précédentes, où l'oxyde inorganique est l'oxyde d'aluminium, et la température de séchage précitée pour l'oxyde d'aluminium précité est d'environ 500˚ à environ 600˚C.

**Patentansprüche**

**1.** Verfahren zur Polymerisation einer Monomer-Beschickung, die Ethylen, Chloroform und Wasserstoff enthält, in einer Gasphasen-Wirbelschicht-Reaktionszone, die eine Verteilungsplatten-Einrichtung aufweist, die ein Bett von teilchenförmigen, im wesentlichen polymerisierten Ethylenteilchen umfaßt und unter Betriebsbedingungen für die Polymerisation von Ethylen unter Verwendung der Monomer-Beschickung vorliegt, das die folgenden Stufen umfaßt:
(a) das Trocknen eines anorganischen Oxids mit Oberflächen-Hydroxylgruppen zur Bildung eines Trägers, der im wesentlichen frei von adsorbiertem Wasser ist;
(b) das Umsetzen der Oberflächen-Hydroxylgruppen des Trägers mit mindestens einer im wesentlichen stöchiometrischen Menge mindestens einer metallorganischen Verbindung der Formel $R_xMR'_yR''_z$, worin stehen M für ein Metall der Gruppe III des Periodischen Systems der Elemente, R für eine Alkylgruppe mit 1 bis 12 Kohlenstoffatomen, R' und R'' unabhängig voneinander ausgewählt werden aus der Gruppe, die besteht aus H, Cl und Alkyl- und Alkoxygruppen mit 1 bis 12 Kohlenstoffatomen, x einen Wert von 1 bis 3 hat und y und z jeweils einen Wert von 0 bis 2 haben

14

können, wobei die Summe von y und z nicht größer als 3 - x ist, zur Herstellung eines behandelten Trägers;

(c) das Umsetzen des so behandelten Trägers mit mindestens etwa 0,001 Mol pro Mol der metallorganischen Verbindung, mindestens einer Vanadinverbindung der Formel, ausgewählt aus $(RO)_n VOX_{3-n}$ und $(RO)_m VX_{4-m}$, worin stehen R für einen monovalenten $C_1$-$C_{18}$-Kohlenwasserstoffrest, der frei von einer aliphatischen Unsättigung ist, X für Cl oder Br, n für eine Zahl von 0 bis 3 und m für eine Zahl von 0 bis 4;

(d) das Umsetzen des Produkts der Stufe (c) mit mindestens etwa 0,1 Mol pro Mol der metallorganischen Verbindung, eines Alkohols, der 1 bis 18 Kohlenstoffatome enthält;

(e) das Einführen des Produkts der Stufe (d) in eine Gasphasen-Reaktionszone zur Bildung eines Teils des Bettes (der Wirbelschicht) in der Wirbelschicht-Reaktionszone;

(f) das Einführen eines Trialkylaluminiums, getrennt und unabhängig von der Einführungsstufe (e) und an einem anderen Ort, in die Gasphasen-Reaktionszone in der Weise, daß das Bett (die Wirbelschicht) in der Gasphasen-Reaktionszone umfaßt das Produkt der Stufe (d), das Trialkylaluminium und die teilchenförmigen, im wesentlichen polymerisierten Ethylenteilchen, wobei dieses Einführen in einer solchen Rate durchgeführt wird, daß in der Wirbelschicht der Stufe (g) ein Verhältnis zwischen der molaren Konzentration an Trialkylaluminium und der molaren Konzentration an Vanadin in $(RO)_n VOX_{3-n}$ oder $(RO)_m VX_{4-m}$ von 1 bis etwa 5 000 aufrechterhalten wird;

(g) das Fluidisieren des Bettes (der Wirbelschicht) der Stufe (f) bei einem Druck von etwa 0,7 bis etwa 4,2 MPa und bei einer Temperatur von etwa 50 bis etwa 120 °C durch Diffundierenlassen unterhalb des Bettes (der Wirbelschicht) der Stufe (f) durch die Verteilungsplatten-Einrichtung eines Gasgemisches, das Ethylen, Wasserstoff und Chloroform enthält, in einer Rate, die ausreicht, um eine lineare Gasgeschwindigkeit in dem Bett (der Wirbelschicht) der Stufe (f) von etwa 15 bis etwa 60 cm/s und ein Molverhältnis von Chloroform zur Vanadinkomponente in $(RO)_n VOX_{3-n}$ oder $(RO)_m VX_{4-m}$ von etwa 2 bis etwa 5 000 zu ergeben, wobei das Einführen der Stufe (e) an einer Position erfolgt, die sich bei etwa 1/8 bis etwa 1/2 der Höhe der Wirbelschicht oberhalb der Verteilungsplatten-Einrichtung befindet;

(h) das Entfernen von teilchenförmigen, im wesentlichen polymerisierten Ethylenteilchen aus der Reaktionszone oberhalb und in der Nähe der Verteilungsplatten-Einrichtung, wobei die Teilchen eine enge bis mittlere Molekulargewichtsverteilung aufweisen; und

(i) das Recyclisieren des nicht-umgesetzten Gases aus der Stufe (g) aus dem Kopf der Reaktionszone in den Boden der Reaktionszone unterhalb der Verteilungsplatten-Einrichtung.

2. Verfahren nach einem der vorhergehenden Ansprüche, worin das Gasgemisch etwa 50 bis etwa 99,9 Vol.-% Ethylen, etwa 0,10 bis etwa 10,0 Vol.-% Wasserstoff und etwa 0,0001 bis etwa 1,000 Vol.-% Chloroform enthält.

3. Verfahren nach einem der vorhergehenden Ansprüche, worin das Gasgemisch, das in der Stufe (g) eingeführt wird, zusätzlich ein α-Olefin enthält.

4. Verfahren nach Anspruch 3, worin das Gasgemisch etwa 0,5 bis etwa 30,0 Vol.-% α-Olefin, etwa 50,0 bis etwa 99,4 Vol.-% Ethylen, etwa 0,1 bis etwa 10,0 Vol.-% Wasserstoff und etwa 0,0001 bis etwa 1,0 Vol.-% Chloroform enthält.

5. Verfahren nach Anspruch 3 oder 4, worin das α-Olefin Propylen, Buten-1, Hexen-1, 4-Methyl-penten-1 oder Octen-1 ist.

6. Verfahren nach einem der vorhergehenden Ansprüche, worin das Trocknen in der Stufe (a) bei einer Temperatur von etwa 100 bis etwa 1 000 °C durchgeführt wird,

das getrocknete anorganische Oxid dann auf Umgebungstemperatur abgekühlt wird;

mindestens eine der metallorganischen Verbindungen der Stufe (b) eine Verbindung der Formel RAlR'R'' ist;

das Trialkylaluminium der Stufe (f) Triethylaluminium oder Tri-n-hexylaluminium ist und in einem flüssigen Kohlenwasserstoff eingeführt wird, bei dem es sich handelt um Isobutan, Isopentan, Hexan oder Heptan; und

das nicht-umgesetzte Gasgemisch der Stufe (g) aus dem Kopf der Reaktionszone durch eine Wärmeaustauscher-Einrichtung in den Boden der Reaktionszone unterhalb der Verteilungsplatten-Einrichtung recyclisiert wird.

**7.** Verfahren nach einem der vorhergehenden Ansprüche, worin das Molverhältnis von Chloroform zur Vanadinkomponente etwa 10 bis etwa 500 beträgt.

**8.** Verfahren nach einem der vorhergehenden Ansprüche, worin die Einführungsstufe (e) umfaßt das Einführen des Produkts der Stufe (d) in Form eines trockenen Pulvers unter einem Inertgas.

**9.** Verfahren nach einem der vorhergehenden Ansprüche, worin die Einführungsstufe (e) umfaßt das Einführen des Produkts der Stufe (d) in die Gasphasen-Reaktionszone ohne Waschen des Katalysatorprodukts.

**10.** Verfahren nach einem der vorhergehenden Ansprüche, worin die Rate der Einführung des Produkts der Stufe (e) in die Gasphasen-Reaktionszone so ist, daß die Konzentration des Vanadins in dem Bett (der Wirbelschicht) bei etwa 0,10 bis etwa 50 ppm gehalten wird.

**11.** Verfahren nach einem der vorhergehenden Ansprüche, worin das anorganische Oxid Aluminiumoxid ist und die Trocknungstemperatur für das Aluminiumoxid etwa 500 bis etwa 600$^\circ$C beträgt.